# EUROPEAN PATENT SPECIFICATION

(11) **EP 1 364 743 B1**
(45) Date of publication and mention of the grant of the patent: **27.07.2005**
(21) Application number: 03011743.6
(22) Date of filing: 23.05.2003
(51) Int. Cl.: B23Q 5/04, B28D 1/14, C03B 33/00

(54) **Fixture for drilling sheets of fragile material, in particular, sheets of glass**
Vorrichtung zur Bohrung von Platten aus zerbrechlichen Materialen, insbesondere von Glasplatten
Dispositif pour perçage des plaques à matériaux fragiles, notamment des feuilles de verre

(30) Priority: 24.05.2002 IT TO20020445
(43) Date of publication of application: 26.11.2003
(73) Proprietor: BIMATECH S.r.l., 12010 Cuneo (IT)
(72) Inventor: Paci, Luciano, 61100 Pesaro (IT); Tamburini, Marco, 61100 Pesaro (IT); Tamburini, Paolo, 61100 Pesaro (IT)
(74) Representative: Cerbaro, Elena, Dr.

(56) References cited:
- GB-A- 1 451 391
- US-A- 3 162 091
- US-A- 3 164 063

## Description

The present invention relates to a fixture for drilling sheets of fragile material, in particular, sheets of glass. Such a fixture, according to the preamble of claim 1 is known from US 3 162 091.

Sheets of glass, to which the following description refers purely by way of a non-limiting example, are drilled on machines comprising a spindle fitted with a drill bit, which is pushed against and fed through the sheet to form dead or through holes. When drilling through holes, the bit, as it comes out on the opposite side, normally splinters the sheet, so that one of the edges of the through hole is discontinuous and normally "jagged". As a result, the drilled sheet cannot be tempered, as required in certain applications, such as glass doors, in that the sheet would shatter immediately on insertion inside the furnace.

To overcome the above drawback, sheets for tempering are drilled using special drilling machines comprising a number of rotary spindles, each fitted with a drill bit, and which rotate and move independently of one another. To drill each hole, a dead hole is first drilled by a first bit advanced a given distance depending on, and normally equal to less than half, the sheet thickness; the first bit is then withdrawn; and a second bit is advanced from the opposite side of the sheet until it breaks through the dead hole to form the through hole.

Though preventing splintering of the sheet around the through hole, the above drilling method calls for two drilling heads, and, above all, for a drilling machine with independent heads, which is used solely for drilling and is not always available in conventional sheetworking stations.

It is an object of the present invention to provide a fixture designed to provide a straightforward, low-cost solution to the above problem, and which, in particular, provides for splinter-free drilling using conventional sheetworking machines with a movable machining head.

According to the present invention, there is provided a fixture for drilling sheets of fragile material, in particular sheets of glass, and which is connectable to a movable machining head comprising a supporting structure and a powered rotary member; the fixture being characterized by comprising a supporting frame; connecting means for connecting the supporting frame to the supporting structure of the machining head; a first and at least a second spindle for a first and a second drilling tool respectively, said spindles being connected to said supporting frame to rotate about respective axes parallel to each other, and being oriented in opposite directions with respect to the supporting frame, so that the cutting edges of the tools are located on opposite sides of the supporting frame; and motion transmission means comprising an input member connectable to said rotary member, and which transmit motion to both said first and said second spindle.

A number of non-limiting embodiments of the invention will be described by way of example with reference to the accompanying drawings, in which:
Figure 1 shows a schematic side view of a preferred embodiment of the fixture according to the present invention fitted to a movable machining head;
Figure 2 is similar to, and shows a variation of a detail in, Figure 1.

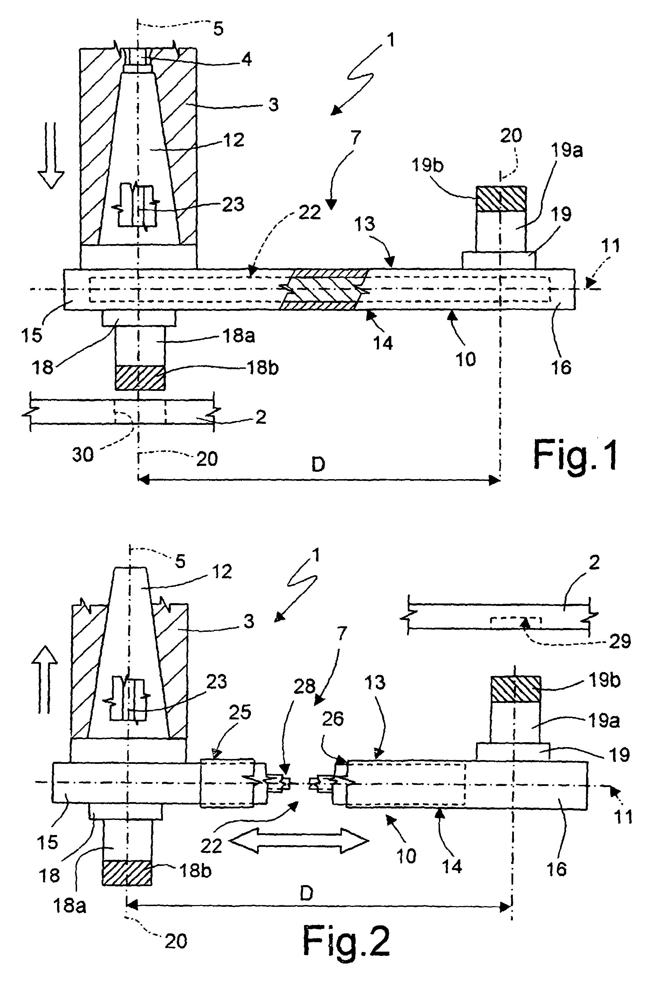

Number 1 in Figure 1 indicates as a whole a movable machining head of a machine (not shown) for machining a sheet 2 of fragile material, such as glass, stone, marble, granite, etc. Machining head 1, which is known, comprises a supporting structure 3, and a powered rotary member 4 rotating inside structure 3 about an axis 5.

Machining head 1 is fitted releasably with a drilling fixture 7 for drilling both dead and through holes in sheet 2. With reference to Figure 1, fixture 7 comprises a hollow supporting frame 10 elongated in a longitudinal direction 11 perpendicular to axis 5; and a known connecting portion or shank 12, not described in detail, for connecting hollow frame 10 to structure 3 of machining head 1. Frame 10 is bounded by two opposite lateral surfaces 13 and 14, and comprises two opposite longitudinal end portions 15 and 16, to which are connected, in known manner not described in detail, respective spindles 18 and 19 rotating about respective axes 20 parallel to axis 5 and perpendicular to longitudinal direction 11. Spindles 18 and 19 extend through respective surfaces 14 and 13, and support respective drilling tools 18a and 19a extending in opposite directions, so that their cutting portions 18b, 19b are located on opposite sides of frame 10. Spindles 18 and 19 are operated by a mechanical, preferably gear, transmission 22 (shown schematically), which extends entirely inside frame 10, and comprises an input shaft 23 extending through connecting shank 12 and connected in known manner to rotary member 4 of machining head 1 to transmit motion to both spindles 18, 19.

In the Figure 1 example, end portions 15 and 16 of frame 10 are connected integrally to each other, so that the distance D between the axes 20 of rotation of spindles 18 and 19, and therefore between the drilling tools, is predetermined and nonadjustable.

In the Figure 2 example, end portions 15 and 16 are connected to each other by a known adjusting device 25 for adjusting the distance D between the axes of spindles 18 and 19, and therefore of the drilling tools. In a preferred embodiment, adjusting device 25 comprises a guide-slide coupling 26, and is a discrete adjusting device. Alternatively, adjusting device 25 is a continuous type, and is conveniently powered to permit any relative arrangement of spindles 18 and 19. In the example shown, transmission 22 also comprises a known, conveniently telescopic, adjustable transmission assembly 28 interposed between spindles 18 and 19.

In actual use, machining head 1 fitted with fixture 7 is first moved parallel to work sheet 2 to position one of the two drilling tools, e.g. tool 19a, as required, and then moves frame 10 towards sheet 2 in a direction parallel to axis 20 and by a given distance normally less than the thickness of sheet 2 to form a dead hole 29 (Figure 2). Once the dead hole is drilled, and still moving machining head 1, tool 19a is backed up and away from sheet 2, and tool 18a is first positioned perfectly coaxial with the axis of hole 29, and is then advanced to form a through hole 30.

By employing a frame 10 supporting two tools 18a and 19a extending in parallel but opposite directions, fixture 7 described therefore provides for drilling through holes without splintering the sheet, and, above all, using an ordinary machine, which has a machining head with rotary member fitted selectively with different tools, each for performing a specific operation, e.g. grinding, etching, polishing, etc.

Clearly, changes may be made to fixture 7 as described herein without, however, departing from the scope of the present invention. In particular, frame 10 and/or shank 12 for connection to movable machining head 1 may be formed otherwise than as shown by way of example; and spindles 18 and 19 may be connected to frame 10 in positions other than those shown, and may differ in number from that indicated by way of example.

## Claims

1. A fixture (7) for drilling sheets (2) of fragile material, in particular sheets of glass, and which is connectable to a movable machining head (1) comprising a supporting structure (3) and a powered rotary member (4); the fixture (7) being **characterized by** comprising a supporting frame (10); connecting means (12) for connecting the supporting frame (10) to the supporting structure (3) of the machining head (1); a first (18) and at least a second (19) spindle for a first (18a) and a second (19a) drilling tool respectively, said spindles (18) (19) being connected to said supporting frame (10) to rotate about respective axes (20) parallel to each other, and being oriented in opposite directions with respect to the supporting frame (10), so that the cutting edges of the tools (18a) (19a) are located on opposite sides of the supporting frame (10); and motion transmission means (22) comprising an input member (23) connectable to said rotary member (4), and which transmit motion to both said first (18) and said second (19) spindle.

2. A fixture as claimed in Claim 1, **characterized in that** the axes (20) of rotation of said spindles (18) (19) are spaced transversely apart.

3. A fixture as claimed in Claim 1 or 2, **characterized in that** the axes (20) of rotation of said spindles (18) (19) extend parallel to the axis (5) of rotation of said rotary member (4).

4. A fixture as claimed in Claim 3, **characterized in that** the axis (20) of rotation of one (18) of said spindles (18) (19) coincides with the axis (5) of rotation of said rotary member (4).

5. A fixture as claimed in any one of the foregoing Claims, **characterized in that** said first (18) and said second (19) spindle are located a fixed distance (D) apart.

6. A fixture as claimed in any one of Claims 1 to 4, **characterized by** comprising adjusting means (25) for adjusting the distance (D) between said two spindles (18) (19).

7. A fixture as claimed in Claim 6, **characterized in that** said adjusting means (25) are discrete adjusting means.

8. A fixture as claimed in Claim 6, **characterized in that** said adjusting means (25) are continuous adjusting means.

9. A fixture as claimed in any one of Claims 6 to 8, **characterized in that** said supporting frame (10) comprises a first (15) and a second (16) end portion, each fitted with a respective said spindle (18) (19); said adjusting means (25) comprising at least a guide-slide coupling interposed between said end portions (15) (16).

10. A fixture as claimed in any one of the foregoing Claims, **characterized in that** said supporting frame (10) comprises a cavity housing at least said transmission means (22).

## Patentansprüche

1. Einspannvorrichtung (7) zum Bohren von Platten (2) aus brüchigem Material, insbesondere Platten aus Glas, die mit einem beweglichen Maschinenkopf (1) verbunden werden kann, der eine Tragestruktur (3) und ein angetriebenes Drehelement (4) umfasst, wobei die Einspannvorrichtung (7) **dadurch gekennzeichnet ist, dass** sie einen Tragerahmen (10), eine Verbindungseinrichtung (12), die den Tragerahmen (10) mit der Tragestruktur (3) des Maschinenkopfes (1) verbindet, eine erste (18) und wenigstens eine zweite (19) Spindel für ein erstes (18a) bzw. ein zweites (19a) Bohrwerkzeug, wobei die Spindeln (18) (19) mit dem Tragerahmen (10) verbunden sind, um sich um entsprechende Achsen (20) parallel zueinander zu drehen, und in Bezug auf den Tragerahmen (10) in entgegengesetzten Richtungen ausgerichtet sind, so dass die Schneidkanten der Werkzeuge (18a) (19a) sich an gegenüberliegenden Seiten des Tragerahmens (10) befinden, und eine Bewegungsübertragungseinrichtung (22) umfasst, die ein Eingangselement (23) umfasst, das mit dem Drehelement (4) verbunden werden kann, und die Bewegung auf die erste (18) sowie die zweite (19) Spindel überträgt.

2. Einspannvorrichtung nach Anspruch 1, **dadurch gekennzeichnet, dass** die Drehachsen (20) der Spindeln (18) (19) in Querrichtung voneinander beabstandet sind.

3. Einspannvorrichtung nach Anspruch 1 oder 2, **dadurch gekennzeichnet, dass** sich die Drehachsen (20) der Spindeln (18) (19) parallel zur Drehachse (5) des Drehelementes (4) erstrecken.

4. Einspannvorrichtung nach Anspruch 3, **dadurch gekennzeichnet, dass** die Drehachse (20) einer (18) der Spindeln (18) (19) mit der Drehachse (5) des Drehelementes (4) zusammenfällt.

5. Einspannvorrichtung nach einem der vorangehenden Ansprüche, **dadurch gekennzeichnet, dass** sich die erste (18) und die zweite (19) Spindel in einem festen Abstand (D) zueinander befinden.

6. Einspannvorrichtung nach einem der Ansprüche 1 bis 4, **dadurch gekennzeichnet, dass** sie Einstelleinrichtungen (25) zum Einstellen des Abstandes (B) zwischen den zwei Spindeln (18) (19) umfasst.

7. Einspannvorrichtung nach Anspruch 8, **dadurch gekennzeichnet, dass** die Einstelleinrichtungen (25) separate Einstelleinrichtungen sind.

8. Einspannvorrichtung nach Anspruch 6, **dadurch gekennzeichnet, dass** die Einstelleinrichtungen (25) stufenlose Einstelleinrichtungen sind.

9. Einspannvorrichtung nach einem der Ansprüche 6 bis 8, **dadurch gekennzeichnet, dass** der Tragerahmen (10) einen ersten (15) und einen zweiten (16) Endabschnitt umfasst, die jeweils mit einer entsprechenden der Spindeln (18) (19) versehen sind, wobei die Einstelleinrichtungen (25) wenigstens eine Führungs-Gleitkupplung umfassen, die zwischen den Endabschnitten (15) (16) angeordnet ist.

10. Einspannvorrichtung nach einem der vorangehenden Ansprüche, **dadurch gekennzeichnet, dass** der Tragerahmen (10) einen Hohlraum umfasst, der wenigstens die Übertragungseinrichtung (22) aufnimmt.

## Revendications

1. Monture (7) pour le perçage de feuilles (2) de matériau fragile, en particulier des feuilles de verre, et qui peut être raccordée à une tête d'usinage mobile (1) comprenant une structure de support (3) et un élément rotatif motorisé (4) ; la monture (7) étant **caractérisée en ce qu'**elle comprend un cadre de support (10) ; des moyens de raccordement (12) destinés à raccorder le cadre de support (10) à la structure de support (3) de la tête d'usinage (1) ; une première (18) et au moins une deuxième (19) broches destinées respectivement à un premier (18a) et un deuxième (19a) outils de perçage, lesdites broches (18) (19) étant raccordées audit cadre de support (10) pour tourner autour d'axes (20) respectifs parallèles l'un à l'autre, et étant orientées dans des directions opposées par rapport au cadre de support (10), de sorte que les bords de découpe des outils (18a) (19a) soient situés sur des côtés opposés du cadre de support (10) ; et des moyens de transmission de mouvement (22) comprenant un élément d'entrée (23) pouvant être raccordé audit élément rotatif (4), et qui transmettent un mouvement auxdites première (18) et deuxième (19) broches.

2. Monture selon la revendication 1, **caractérisée en ce que** les axes (20) de rotation desdites broches (18) (19) sont espacés l'un de l'autre de manière transversale.

3. Monture selon la revendication 1 ou 2, **caractérisée en ce que** les axes (20) de rotation desdites broches (18) (19) s'étendent parallèlement à l'axe (5) de rotation dudit élément rotatif (4).

4. Monture selon la revendication 3, **caractérisée en ce que** l'axe (20) de rotation de l'une (18) desdites broches (18) (19) coïncide avec l'axe (5) de rotation dudit élément rotatif (4).

5. Monture selon l'une quelconque des revendications précédentes, **caractérisée en ce que** lesdites première (18) et deuxième (19) broches sont situées à une distance fixe (D) l'une de l'autre.

6. Monture selon l'une quelconque des revendications 1 à 4, **caractérisée en ce qu'**elle comprend des moyens de réglage (25) destinés à régler la distance (D) entre lesdites deux broches (18) (19).

7. Monture selon la revendication 6, **caractérisée en ce que** lesdits moyens de réglage (25) sont des moyens de réglage distincts.

8. Monture selon la revendication 6, **caractérisée en ce que** lesdits moyens de réglage (25) sont des moyens de réglage continus.

9. Monture selon l'une quelconque des revendications 6 à 8, **caractérisée en ce que** ledit cadre de support (10) comprend des première (15) et deuxième (16) parties d'extrémité, chacune étant équipée d'une dite broche (18) (19) respective ; lesdits moyens de réglage (25) comprenant au moins un couplage de guidage-coulissement interposé entre lesdites parties d'extrémité (15) (16).

10. Monture selon l'une quelconque des revendications précédentes, **caractérisée en ce que** ledit cadre de support (10) comprend une cavité logeant au moins lesdits moyens de transmission (22).
